# EUROPEAN PATENT APPLICATION

(11) **EP 1 239 635 A1**
(43) Date of publication of application: **11.09.2002**
(21) Application number: 01302079.7
(22) Date of filing: 07.03.2001
(51) Int. Cl.: H04L 12/56, H04L 12/14, H04L 12/24

(54) **Method of providing service classes in a packet network**

(71) Applicant: BRITISH TELECOMMUNICATIONS public limited company, London EC1A 7AJ (GB)
(72) Inventor: The designation of the inventor has not yet been filed
(74) Representative: Nash, Roger William

(57) **Abstract**

A method of operating a packet network to provide selectable levels of service to different communications flows is disclosed. The method provides a network user with more flexibility in assigning a level of service to a given flow than conventional Asynchronous Transfer Mode networks. Furthermore, it provides a better differentiation between different qualities of service than is enabled by recent proposals for Internet Protocol networks. By identifying packets belonging to flows requiring a relatively high level of service, and, in response, allowing those packets access to capacity which is otherwise withheld, a relatively high level of service can be provided to streams of such packets. The invention is especially useful in relation to providing selected flows along residential high-speed Internet access lines (e.g. ADSL) with a higher level of capacity than other flows. The withheld capacity can comprise capacity which is normally hidden from the end-user by network configuration. The sender and/or receiver of a flow can be charged for the high level of service provided to that flow.

## Description

The present invention relates to a method of operating a packet network node, a packet subnet and a packet network. In this specification, the term network is used to refer to the combination of terminals and the subnet which enables communication between them.

For many years telecommunications subnets were primarily designed to offer telephony services. In order to use the available resources efficiently, network nodes in such networks multiplexed several conversations onto each physical link leading from the node to another node in the subnet. Conventionally, time division multiplexing was used. In that case, each node associated a predetermined time slot in a repeating sequence of time slots with a given conversation.

In recent years, however, the nature of communications traffic has changed markedly. In particular, a large proportion of communications traffic now comprises communication flows generated in the course of Internet browsing - such communication flows include transfers of World Wide Web pages or media files to and from a user's computer via the Internet. Normally, the communications traffic generated in a single Internet browsing session will be characterised by inactivity punctuated by bursts of traffic as communication flows take place - e.g. as a Web page or video-clip is downloaded (or uploaded).

This characteristic results in time division multiplexing making inefficient use of the available subnet resources. More modern networks instead involve terminals (or nodes at the edge of a subnet) dividing a communication into packets. Such networks are known as packet networks (which include packet subnets). Packet subnet nodes receive packets, store them and forward them onto links leading from them. The interspersing of packets from different communications onto the link provides statistical multiplexing. With today's communication traffic, statistical multiplexing makes more efficient use of available resources than time division multiplexing. The downside of statistical multiplexing is that arrangements for providing a flow with a predictable quality of service are complex.

One form of packet subnet, known as an Asynchronous Transfer Mode (ATM) subnet, provides a predictable quality of service by so-called Connection Admission Control carried out during a connection set-up phase. In this case, each terminal indicates to the subnet: a) the terminal with which it wishes to communicate, b) parameters of the traffic is has to send and c) the quality of service it wishes to receive. The subnet finds a route between the terminal and the other terminal, and each node is checked to see whether it has sufficient resources to provide the requested quality of service. If each node does have sufficient resources, then the communication is allowed. The first node on the route from the terminal to the other terminal ensures that the traffic does not violate the parameters put forward by the terminal in the connection set-up phase. In this way, the provision of sufficient resource for all communications admitted to the subnet is ensured.

Internet Protocol (IP) subnets are another form of packet subnet. Two proposals for operating IP subnets to provide a predictable quality of service are known as 'Int-Serv' and 'Diff-Serv'.

The operation of an Int-Serv subnet in relation to a communication flow requiring a guaranteed quality of service is broadly similar to an ATM subnet. Although resources are described as being 'reserved' for, say, a real-time communication, other communications requiring only best-effort service from the subnet may use the full capacity of a link on which those resources are 'reserved'. If a packet belonging to the real-time communication arrives at the node when best effort traffic is using the entire capacity of the link, then packet scheduling processes within the node ensure than the communication requiring real-time service is provided with the portion of the link capacity 'reserved' for it. In other words, in an Int-Serv network, the 'reserved' resources are not withheld from other communication flows.

Diff-Serv subnets differ from Int-Serv subnets in an important respect. Traffic placed onto a Diff-Serv network is labelled as requiring one of a number of predetermined classes of service. Int-Serv subnet nodes must process each communication flow for which resources are 'reserved' separately. Diff-Serv subnet nodes treat all communication flows comprising packets having the same class of service indication in the same way. As with Int-Serv subnet nodes, Diff-Serv subnet nodes do not withhold resources provided for communication flows requiring higher classes of service from communication flows requiring lower classes of service - they instead use packet scheduling to give priority to communication flows requiring a higher class of service when such a communication flow is traversing the node.

From the above, it will be seen that in an ATM subnet, the responsibility for providing sufficient resources to a communication flow in effect falls upon nodes at the edge of the subnet which ensure that a sending terminal does not send more traffic onto the network than it indicated during the connection set-up phase. In this way, the availability of communications resource to a communication flow is ensured. As will be understood by those skilled in the art, some ATM connections (known as 'permanent virtual connections') are persistent - i.e. they last for a time greater than the time-scale of communication flows. The policing of communications by nodes at the edge of an ATM subnet increases the complexity and cost of the subnet.

IP subnets ensure the availability of communications resource to a communication flow by way of packet scheduling processes carried out in subnet nodes. Such packet scheduling processes are only effective when the resource is contended for by many communication flows (the only time at which they need to be effective). The availability of communications resource at other times to other flows is seen as a benefit of IP subnets since this increases utilisation of that resource.

According to the present invention there is provided a method of operating a packet network node, said method comprising: identifying one or more packets traversing said node as having a permit indication associated with them; and responsive to said identification, providing said packets with use of an exclusive portion of said node's resources persistently withheld from other packets.

Although it reduces link utilisation in IP subnets, the persistent withholding of communications resource from ordinary packet flows (a stream of packets that represent a communication flow) increases the differentiation between services offered to packet streams associated with the permit indication. In contrast to ATM subnets, the granting of access to the withheld capacity responsive to a permit indication increases the flexibility of access to the withheld capacity. Also, having the node control the provision of its resources to packets removes the need for policing seen in ATM subnets.

The node's resource might, for example, be bandwidth over a link in the network or storage space within a buffer in a network node. It is to be noted that a link may be wireless - e.g. a channel associated with a particular code in a Code Division Multiple Access cellular radio system.

Preferably, said permit indication comprises a shared permit indication. In this case, since the permit indication is available for sharing between many different packet streams the need for storing data to identify which packet streams are to receive a higher quality of service is obviated. In contrast, ATM or Int-Serv subnets can only offer connection-specific quality of service.

Preferably, said packets comprise datagrams. Datagram subnets avoid the need for a connection set-up phase, thereby improving the efficiency of communications which do not require a connection-oriented service from the subnet. In this specification, datagram is used to mean a packet which includes a destination address for the packet.

Conveniently, the format of said packets conforms to the Internet Protocol, and said throughput indication is given in the Traffic Class octet defined by the Internet Protocol version 6 or the 'diffserv' byte (DS byte) defined in Internet Protocol version 4. This enables the present invention to be implemented without increasing the size of the header of the packets sent across the network, thereby maintaining the efficiency (in the sense of payload bytes per header bytes) of the communication. The present invention might also be implemented, for example, using the Precedence bits in the Type of Service field of a packet constructed in accordance with earlier interpretations of the Internet Protocol version 4. The above advantage would be achieved in that case also.

Preferably, said permit indication is contained within said packets. This has the advantage of avoiding the need for any separate signalling that specifies which packets are to be permitted access to the withheld resource.

In some embodiments said exclusive portion comprises an exclusive portion specific to an interface (which might be logical or physical) of said node. This has the advantage that the operation of other interfaces need not be affected by the operation of the present invention. The interface is preferably a logical one. In preferred embodiments, the logical interface is to a logical portion of a physically attached link, which logical portion relates to a physical link further towards the destination of the flow (e.g. a cable or twisted copper pair leading to a customer's premises).

In preferred embodiments, said interface-specific exclusive portion comprises at least a predetermined portion of the capacity of a link within said network. In other embodiments, the resource may be buffer space for storing packet queues at a network node. In those embodiments, the non-availability of the reserve portion of the buffer space to packets without the permit indication leads to an increased likelihood that those packets will be dropped. That in turn leads to senders operating dynamic sliding window protocols (e.g. the Transmission Control Protocol used in most Internet hosts) reducing the rate at which they send packets. However, the preferred embodiments provide differentiation in download times without relying on the communicating entities running in accordance with the Transmission Control Protocol or other protocols that similarly reduce the rate of packet transmission responsive to packet loss.

In some embodiments, said method further comprises giving packet streams having said permit indication priority over other packet streams in accessing a remaining portion of said node's resources. This has the effect that the stream having the permit indication additionally has access to resources normally used by streams without the permit indication.

According to a second aspect of the present invention there is provided a method of operating a packet subnet to provide a different quality of service to different packet streams, said method comprising operating at least one node within said subnet in accordance with the first aspect of the present invention.

By operating a subnet in this way, the network operator is able to offer reliably distinguishable levels of service in transporting information across the subnet. This differentiation is achievable even between packet streams being transferred simultaneously - e.g. a user may receive a video-clip a faster rate while the transfer of a software file continues at a limited rate. Importantly, the differentiation mechanism does not enable other senders to benefit from the sender sending packets with said permit indication.

Preferably, in relation to this second aspect, said node's resource comprises resources provided for a user-subnet interface. The user in the 'user-subnet interface' may be a single PC or might be a Local Area Network, for example. The node's withheld resource might be allocated to a user-subnet interface, or it might simply be available to the user-subnet interface substantially all the time as a result of over-provisioning such resource shared by more than one user-subnet interface. Such resources need not be found at in an edge node of the subnet, but the configuration of the network is simplified where the resources are present in an edge node that provides said user-subnet interface.

According to a third aspect of the present invention there is provided a method of operating a packet network comprising first and second devices in communication via a packet subnet, said method comprising:
operating said first device to send a plurality of streams of packets;
marking selected streams of packets with said permit indication;
operating said packet subnet in accordance with a method according to the second aspect of the present invention; and
operating said second device to receive said streams of packets;
whereby the quality of service offered by said subnet to the communication of a stream of packets varies in dependence on the presence or absence of said permit indication in said streams of packets.

Preferably, said withheld resources comprise resources of a link providing a physical interface between the subnet and said first or second device. Where the device is sending, this has the advantage that a single node can control the quality of service offered by the subnet to communications with any receiver connected to the subnet. Where the device is receiving, this has the advantage that a single node can control the quality of service offered by the subnet to communications with any sender connected via the subnet.

In some embodiments of the present invention, said link comprises a connection for which capacity is reserved in a connection-oriented network. This arrangement enables the node operating in accordance with the first aspect of the present invention to be remote from the receiver node. This is advantageous, for example, to an Internet Service Provider which does not wish to set-up local Points of Presence at various places within a country - using these embodiments an Internet Service Provider can use a single node in combination with an existing nationwide network offering a connection-oriented service to provide connections to receivers distributed around the country.

In other embodiments, the link comprises resources reserved by the Resource Reservation Protocol (RSVP) or such like.

In some embodiments, said network further comprises a charging device, said method further comprising the steps of:
detecting one or more packets having said permit indication;
sending a charging indication to said charging device responsive to one or more of said detections; and
operating said charging device, responsive to charging indications received at said charging device, to generate charging data for charging for the provision of said reserve portion of said communications resource.

By charging senders (and/or receivers) for a reserved service, excessive use of the reserved service can be prevented. These embodiments avoid the need for the node operating in accordance with the first aspect of the present invention to store and access records setting out which senders can use the service each time the service is requested. In the latter case, however, customers could be offered use of the wihtheld resource at any time in return for a monthly subscription or the like.

In a subset of those embodiments, said charging indication includes an identification of the sender of the packets; and said charging device operation step involves preparing charging data for charging said sender.

In networks where the number of receivers outnumbers the number of senders, this has the advantage that the amount of the charging data is reduced. This beneficially reduces the resources (electronic memory or otherwise) that must be devoted to storing the charging data. Additionally, where bills presenting the charges are printed and mailed to the customer, it reduces the amount of paper consumed. Furthermore, it reduces the amount of resources that need to be devoted to handling enquiries about the charges and such like.

According to a fourth aspect of the present invention, there is provided a method of bringing a packet network node's resources into service, said method comprising: in an introduction phase, operating said packet network node in accordance with the first aspect of the present invention; and after said introduction phase, operating said packet network node to allow packets without said permit indication access to at least some of said exclusive portion.

The present inventors have realised that there are both technical and economic benefits in introducing communications capacity in two or more steps. They realised that, in an introduction phase, the tenet (accepted by those skilled in the art prior to the advent of the present invention) that resources should be used as much as possible does not apply. Where the resource is found at a user-subnet interface, the stepwise introduction of capacity means that the load on the core of the network is gradually increased, preventing sudden drops in the performance of the network as a whole. A similar situation arises where new capacity is introduced elsewhere in the network. The present inventors have realised that such situations offer an ideal opportunity to provide customers with a quality of service differentiation using less complex technology than has hitherto been possible. Furthermore, access to different qualities of service is more flexible than in prior-art schemes.

By way of example, specific embodiments of the present invention will now be described with reference to the accompanying drawings in which:
Figure 1 shows an internetwork which operates in accordance with a first embodiment of the present invention to provide differentiated levels of service to a customer;
Figure 2 shows a queuing process carried out by a broadband access server within the internetwork of Figure 1;
Figures 3 and 4 show processes carried out by a customer's personal computer and server computers hosted by an Internet Service Provider in choosing and obtaining video data via the internetwork shown in Figure 1;
Figure 5 shows processes carried out by a charging server to retrieve and store charging data to be used in preparing bills for providing differentiated service to a customer; and
Figure 6 shows an embodiment of the present invention in which a server connected to the Internet Service Provider via the Internet is involved.

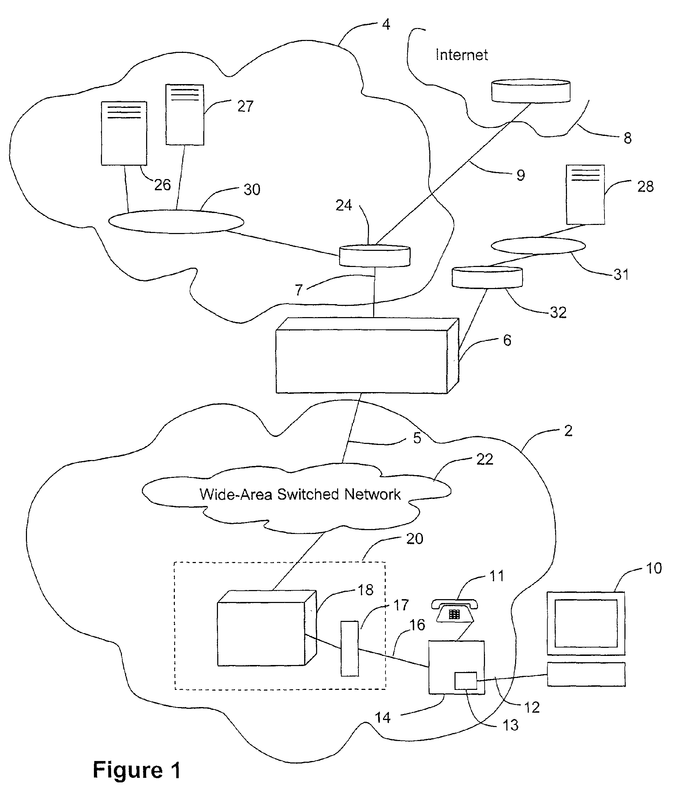

An internetwork (Figure 1) comprises a user's personal computer 10, an ATM network 2, a cable 12 connecting the user's PC 10 to the ATM network 2, an Internet Service Provider's (ISP's) local area network 4, a Broadband Access Server (BAS) 6, an ATM network link 5 which connects the BAS 6 to the ATM network 2 and an ISP network link 7 which connects the BAS 6 to the ISP's local area network 4. In the present embodiment the BAS is provided by a modified Nortel Networks Shasta 5000 Broadband Service Node. The ISP's local area network 4 is connected to the Internet 8 via an Internet link 9. A charging server 28 is connected to the BAS 6 via a router 32 and a Local Area Network 31.

The ATM network 2 comprises a large number of sets of user equipment (11, 13 14), pairs of copper wires 16 extending from each set of user equipment (11, 13, 14) to a local exchange 20, exchange-housed equipment (17,18) housed in the local telephone exchange building 20 and a wide-area switched network 22 which connects a plurality of such DSLAMs 18 (there is normally one or more DSLAMs per exchange building, only one exchange building is shown in the drawing) to the BAS 6. As will be understood by those skilled in the art, the exchange-housed equipment includes a Digital Subscriber Line Access Multiplexer (DSLAM) 18 shared between many users and, for each pair of copper wires 16, a splitter unit 17 which terminates the pairs of copper wires 16. The splitter unit 17 is effective to send signals within the frequency range used for normal telephony to the Public Switched Telephone Network (not shown) and to send signals in higher frequency bands to the DSLAM 18. Each set of user equipment (11, 13, 14) comprises a splitter unit 14 in a customer's premises which incorporates an Asymmetric Digital Subscriber Line (ADSL) modem 13. The splitter unit 14 is effective to send signals within the frequency range used for normal telephony to the user's telephone 11 and to send signals in higher frequency bands to the ADSL modem 13. The ADSL modem 13 represent the network termination point of the ATM network 2. Cable 12 leads from the modem 13 to the PC 10.

The ISP's local area network 4 comprises an IP router 24, a content provider's Web server 26 and video server 27, and a Local Area Network 30 which interconnects them. The previously mentioned Internet link 9 is connected to the IP router 24. The Local Area Network 30 operates in accordance with the Institute of Electrical and Electronics Engineers (IEEE) 802.3 standard at a rate of 100Mbits⁻¹.

That capacity, the capacity of the ISP link 7 and the ATM network 2 is sufficient to ensure that the rate of transmission of a stream of packets between the video server 26 and the personal computer 10 is determined by the BAS 6.

It is to be understood that each of the elements of the internetwork (Figure 1) operates in accordance with version 6 of the Internet Protocol (IP). Furthermore, at least the content provider's video server 27 offers the differentiated services extensions to the UNIX sockets interface, or any other programming interface that enables the setting of the so-called Differentiated Services (DS) field in the IP packet header (see the Internet Engineering Task Force's Request For Comments (RFCs) 2474 and RFC 2475 for details of the DS field).

In accordance with a first embodiment of the present invention, the ATM network (Figure 1) is configured by the ATM network operator as follows. Firstly, an ATM permanent virtual circuit (PVC) is configured between the BAS 6 and each of the modems it serves. The PVC is a constant bit rate (CBR) connection whose peak cell-rate is set to 2Mbits⁻¹. The ATM network operator also configures each PC 10 with an IP address. Thereafter a table associating the IP address of each PC with a label that identifies the PVC which leads to that PC 10 is created in the BAS 6 by manual or automatic methods that are well-known to those skilled in the art.

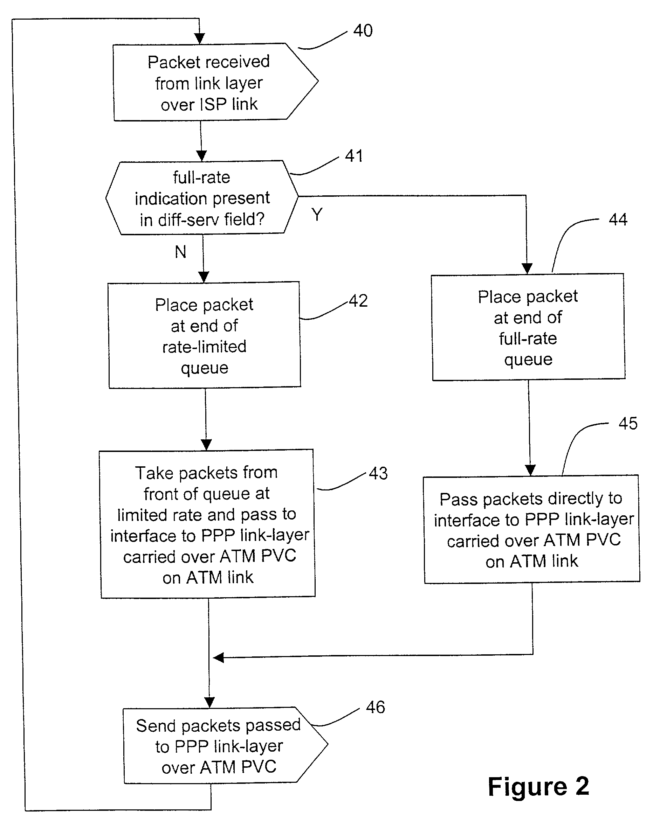

The network layer software in the BAS 6 is supplemented in the present embodiment by the process illustrated in Figure 2.

In a conventional manner, the BAS 6 receives a frame constructed in accordance with the link-layer protocol used over the ISP link 7 (step 40). The link-layer header and/or trailer is then removed from the frame to leave a packet constructed in accordance with the Internet Protocol.

The BAS 6 compares (step 41) the DS field of the IP packet header with a predetermined value (101000 in this example) which is taken to indicate that a full-rate service should be provided to this packet. If that value is not found in the DS field then the packet is placed in a rate-limited queue dedicated to the IP destination address found in the packet (step 42). Packets are taken from the limited-rate queue and passed to a link-layer interface at an average bit-rate which is limited to 512kbits⁻¹. If, on the other hand, the full-rate value is found in the DS field in step 41, then the packet is passed to a full-rate queue dedicated to the destination IP address found in the packet (step 44). Packets are taken from the full-rate queue at a rate equal to the remainder of the capacity on the PVC leading to the user's PC 10 (approx. 1.5Mbits⁻¹). On sending packets over the interface, a (Point-to-Point Protocol) PPP link-layer interface header and trailer are added a frame constructed in accordance with the PPP link-layer protocol. The frame thus constructed is then passed through the ATM Adaptation Layer 5 (AAL5) segmentation process in which it is split into ATM cells and sent onto the ATM PVC connection. Those skilled in the art will realise that the sending of the packets (step 46) is therefore conventional.

Control then passes back to the packet reception step (40) on another packet being received from the link-layer interface to the ISP link 7.

The router 24 is configured to reset (to 000000) the DS fields of packets arriving over the Internet link 9 which have their DS field set to 101000.

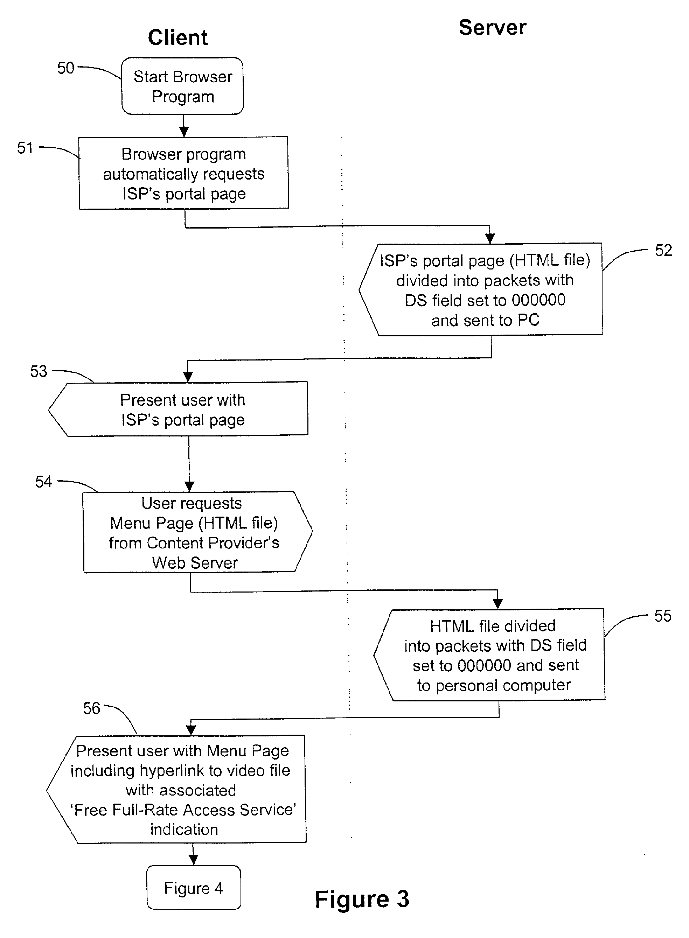

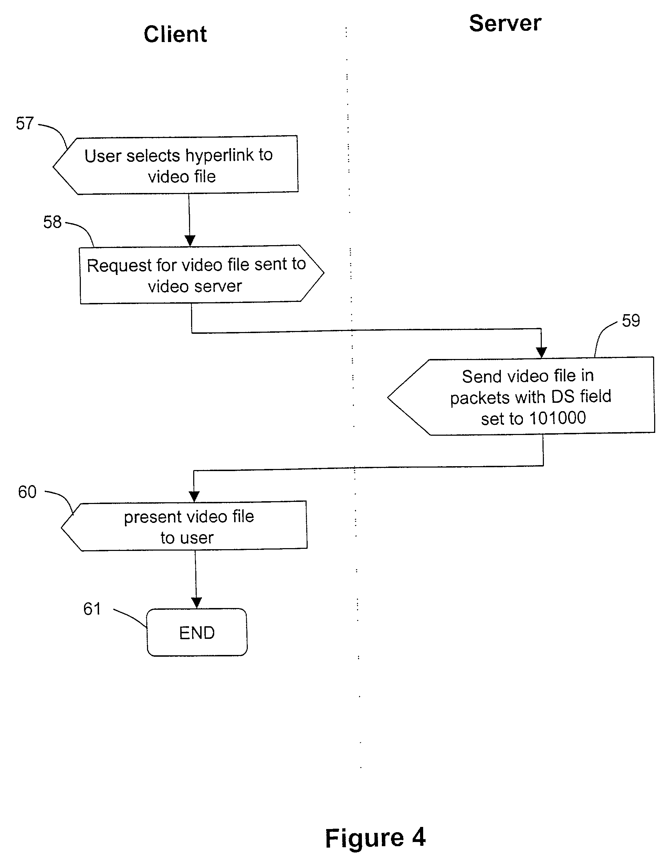

Figures 3 and 4 illustrate the operations carried out by the customer's PC 10, and the content provider's Web server 26 and video server 27 in carrying out the method of the present embodiment. In fact, the steps of Figures 3 and 4 carried out by the personal computer 10 are carried out under the control of a conventional browser program such as Netscape's Navigator version 4.

Figure 3 shows the steps involved in the accessing a web-page stored on the Web server 26, which web-page includes an indication for the human viewer that the user is offered a full-rate access service when transferring video files from the video server 27.

In step 50 the customer executes the browser program on the PC 10, which is configured to use the ISP's portal page as its default home page. Therefore, initially the PC 10 sends a request (step 51) for the web-page that the user has chosen to be his 'home page' - in the present example the user has chosen the ISP's portal page as his 'home page'. Pursuant to that request, a server owned by the ISP sends (step 52) a HyperText Mark-up Language (HTML) file representing the portal page to the user's PC 10. The HTML file is decoded and displayed on the screen of the user's PC 10 (step 53). The customer then clicks a link on the portal page which results in the PC requesting (step 54) a HyperText Mark-up Language (HTML) file stored on the content provider's Web server 26.

In response to receiving that request the Web server 26 divides the HTML file into IP packets, addresses those packets to the personal computer 10 and sends them (step 55) onto the internetwork (Figure 1). By default, the DS field of each of those packets is set to 000000. This step can be carried out under the control of conventional web server software running on the Web server 26.

The packets are necessarily routed via the BAS 6. Since the DS fields of the packets are set to 000000, the packets are placed into the limited-rate queue (Figure 2, step 42) dedicated to the user of the PC 10. The packets are then forwarded to the user over the ATM PVC associated with the user's IP address at no more than the limited rate of 512kbits⁻¹ (Figure 2, steps 43 and 46).

Once it is received, the user's PC 10 presents the HTML file as a menu page on the screen of the PC 10 (step 56). The menu page includes one or more hyperlinks which are associated with files stored on the content provider's video server 27. The menu page includes a visual indication that a free full-rate access service will be offered to the customer when he requests those files to be delivered to him.

Turning now to Figure 4, on the user selecting one of those hyperlinks (step 57) a request is sent to the content provider's video server 26 in a conventional manner (step 58). On receiving the request, the video server 26 breaks the video file into packets, and sets the destination address of each to correspond to the IP address of the personal computer 10 and the DS field of each to 101000, and thereafter sends (step 59) those packets onto the internetwork (Figure 1). As mentioned above, the content provider's video server 27 is equipped with an application programming interface that enables the setting of the DS field in this way.

On receiving the video packets, the BAS 6, places the packets in the full-rate queue (Figure 2, step 44) dedicated to the user of the PC 10. The packets are then forwarded to the user over the ATM PVC associated with the user's IP address at no more than the full rate of approx. 1.5Mbits⁻¹ (Figure 2, steps 45 and 46).

The arriving packets are then received and stored at the user's PC 10 · in a conventional manner. Clearly, the maximum video download rate will be around three times faster than video files delivered at the limited rate ( a maximum of 512kbits⁻¹). This will improve the customer's opinion of whatever brand or company name is associated with the content provider's video server 26 and the ISP's portal.

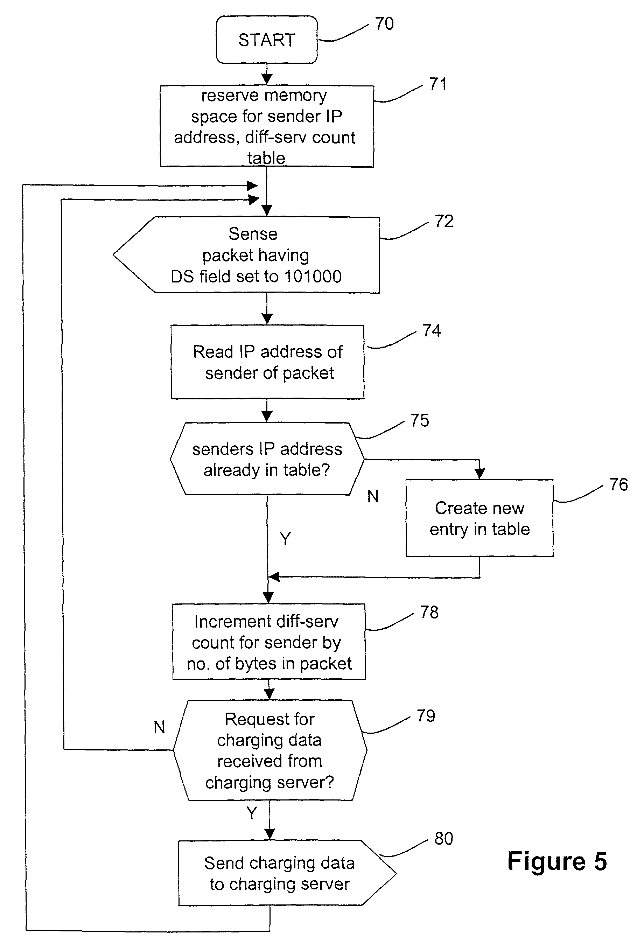

A metering process carried out by the BAS 6 is illustrated by the flow-chart of Figure 5. Those skilled in the art will be able to write a suitable program to control the BAS 6 to carry out such a metering process. The program is installed on the BAS 6 and started (step 70). Once started, the program reserves memory space in the BAS 6 to store a table containing the IP address of any sender of a packet having a DS field set to 101000 and a cumulative count of the number of such bytes sent by that sender (step 71) since the program was started.

Thereafter, the program controls the BAS 6 to investigate each packet that is to be sent over the ATM network 2 (for example using the library of packet capture programs known as libpcap available from the Lawrence Berkeley National Laboratory in Berkeley, California, U.S.A.). On identifying such a packet to have a DS field set to 101000 (step 72), the program first reads the IP address of the sender of the packet (step 74). If the IP address is not already present in the table mentioned above, the program creates an entry for the new sender (step 76). Once an entry is present in the table, the BAS 6 reads the packet length field from the header of the received IP packet and adds that value to the cumulative byte count associated with the senders IP address (step 78).

Thereafter, the BAS 6 checks (step 79) to see whether the charging server 28 has requested a set of metering data - if such a request has been not been made, the program continues to monitor packets being sent to the ATM network 2 (step 72). If such a request has been made, then the accumulated metering data is sent to the charging server 28. The charging server 28 is programmed to request metering data at regular intervals (hourly, for example) and collects that data into a charging database. The database can subsequently be processed by the operator of the BAS 6 to provide a bill to each ISP using the BAS 6. The ISP can then use the indication of sender address in the metering data to bill the owner of the video server 26 for the provision of the full-rate service.

It will be seen how the above embodiment enables the provision of a differentiated delivery between simultaneous user sessions. Furthermore, it enables the content provider to be billed for the full-rate throughput.

A number of alterations can be made to the above described embodiment without departing from the scope of the present invention. Such alterations include:
i) although the above embodiment describes the transfer of video files, it is, of course applicable to any type of file - including software files for example;
ii) in the above embodiment, the wide-area access network used to connect the BAS 6 to the user's network termination point 14 is an ATM network. However, the ATM network could be replaced another type of network such as a frame relay network. An IP network could be used, with IP packets being tunnelled from the BAS 6 to the modem in the PC 10 using the Layer 2 Tunnelling Protocol (L2TP). Yet another alternative would be to use a pure IP network with virtual links configured across it using the Internet reservation protocol (RSVP) for aggregates of flows between the BAS and the DSLAM, rather than for individual flows which is a more common use of RSVP.
iii) there is no requirement that the local access network be provided by pairs of copper wires. Alternative embodiments could use a co-axial cable, hybrid optical fibre / co-axial cable or wireless local loop access network. Where a cable network extends to a customer's premises, the function of the modem in Figure 1 would be performed by a cable modem, the DSLAM 18 would be replaced by a hybrid fibre/co-axial node (HFC node) and the BAS 6 would be replaced by a cable modem terminal server (CMTS), all of which should comply with the data over cable service interface specifications (DOCSIS) published by Cable Television Laboratories, Inc., 400 Centennial Parkway, Louisville, USA. A third alternative access network technology is a broadband wireless access network using wideband code division multiple access technology complying with the Universal Terrestrial Radio Access (UTRA) specifications published by the Third Generation Partnership Project (3GPP). In this case, the modem in Figure 1 would specifically be the mobile termination module in the mobile equipment, the function of the DSLAM 18 would be performed by the base station (node B) and the function of the BAS 6 would be performed by an access server in the user's home network domain.
iv) in the above-described embodiment, the shaper process (Figure 2) is performed at the network layer in the BAS 6. However, the shaper function could be provided in a separate unit, such as the 155Mbits-1 Lucent Access Point 1000 (AP1000) supplied by Lucent Technologies Inc., 600 Mountain Avenue, Murray Hill, New Jersey, USA. In this way, the present invention may be implemented without requiring a conventional BAS 6 to be upgraded. In another variation, the shaper process might be provided on IP router 24.
v) in the above embodiment, the capacity of the communications resource allocated by the shaping process and in the ATM PVC leading to the user's network termination point is apportioned between limited rate streams and full-rate streams if both are present. In alternative embodiment, the full-rate queue could be given simple priority over the limited rate queue. In that case, a full-rate stream would reduce the (already limited) quality of service being offered to a limited rate stream.
vi) more than one diffserv code point could give access to the full rate queue, and more than one code-point could be assigned to the limited rate queue, with different queueing behaviours and priorities over each other assigned to each code point.
vii) an agreed fraction or the entirety of the charge for the full-rate service could be paid for by the end-user.
viii) upstream traffic can also use the same diffserv code-point giving the right to use extra access capacity. Broadband access servers such as the BAS 6 normally limit the upstream traffic rate from an end customer to a value below the physical upstream line capacity, as well as limiting the downstream rate. For instance, the upstream physical limit of the customer's DSL may be 256kbits⁻¹, but the BAS 6 may limit this rate to 56kbits⁻¹. Static rules on the access server are arranged so that only upstream traffic not marked 101000 is rate limited to 56kbits⁻¹, whereas traffic marked 101000 may use any rate up to the physical line capacity. In this variation, the same rules as in the first embodiment are still assumed to be in place for downstream traffic to the end customer. Charges for access to the spare bandwidth available for upstream traffic might be applied to the owner of the sender's address (the end customer's), unless an agreement to vary which end pays is reached.
ix) charges might be made based on a choice of metrics, rather than simple byte volume of traffic using the extra capacity. Examples of possible metrics are listed below, including the volume charge already given:
   a) Traffic measurement based (per service type, including per prioritisation level):
      o A peak bandwidth charge - e.g. a charge based on the maximum observed burst bandwidth (Mbps) used in the month perhaps after ignoring the top 5% of samples, which is a common scheme in the industry
      o A volume charge - i.e. a charge based on volume (Gbytes) used in the month
   b) Reservation based
      o A session charge - i.e. a charge based on session length and reserved bandwidth
      o A charge by static access capacity per service type - i.e. a flat charge for the right to send traffic of a certain service type within a traffic conditioning agreement (TCA)

Static capacity provisioning is a degenerate case of a metering scheme, because the long term static TCA request is all that is metered. It is not recommended for value optimisation, but is relatively simple to implement.

x) Prices for any of the above metrics may be fixed for a long period or vary by time of day. If the capacity of the reserve portion of the resource is only substantially uncontended, rather than absolutely uncontended, the price may be varied with demand in order to ensure that demand is reduced before any potential contention becomes actual contention.

xi) In the above described embodiment, the marking function is performed on the content provider's video server 27. However, the marking function could be provided on a separate unit, such as the 155Mbits⁻¹ Lucent Access Point 1000 (AP1000). An agent of the video serving application running on the video server and triggered by intercepting the request for the video, would take note of the combination of class of customer and content request to decide whether full rate access was required. It would then send a request to the traffic shaper, which would mark traffic in the specified flows with the requested differentiated services indication. The protocol accepted by the traffic shaper would be used, which is typically a proprietary command line interface (CLI) emulation protocol, but may be the reservation protocol (RSVP) extended for policy control (see RFC 2750) or a protocol based on the simple network management protocol (SNMP - see RFC 2570). In this way, the present invention may be implemented without requiring the existing operating system of the video server 27 to be upgraded to a version that supports differentiated services, and without requiring the video serving application to be altered to add knowledge of the choice between limited and full-rate access.

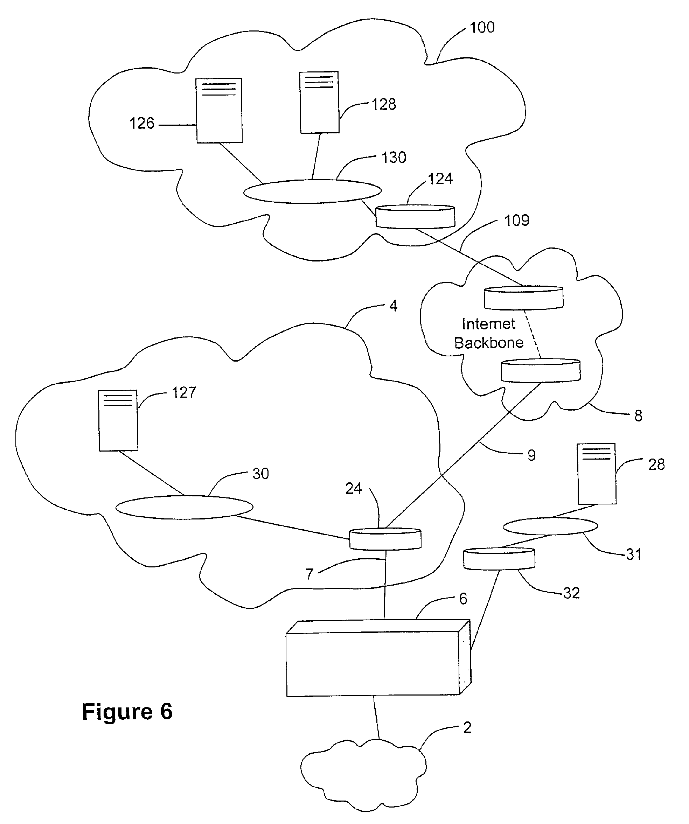

A second embodiment of the present invention in which the content provider is based at a remote Internet Service Provider is illustrated in Figure 6.

The ATM network 2, BAS 6, charging server apparatus (28, 31, 32) are configured and operate as described in relation to the first embodiment.

The Internet Service Provider's service area network 4 is substantially as described in relation to the first embodiment, save for the video server 27 being replaced by a video mirror server 127 operated by a content distributor, and the removal of the content provider's Web server 26.

In this second embodiment, the internetwork (Figure 6) incorporates a second Internet Service Provider's local area network 100. The second local area network 100 is connected to the first local area network via the global Internet 8.

The second Internet Service Provider's network 100 comprises a content provider's Web server 126 and origin video server 128, an Internet router 124 and a LAN 130 interconnecting them.

As will be understood by those skilled in the art, the content provider which operates the origin video server 128 has arranged for a content distributor to mirror (i.e. include an up-to-date copy of) those video files on the video mirror server 127. The video mirror server 128 is programmed to record requests for full-rate video downloads, along with an indication of the content provider that provided the video. Furthermore, the internetwork (Figure 6) is configured to re-direct requests for video files stored on the origin video server 128 received from the ATM network 2 to the video mirror server 127. Those skilled in the art will be aware of many mechanisms for achieving this.

The operation of the second embodiment proceeds similarly to the first embodiment until the user clicks on a link referring to the content provider's Web server 126. In this embodiment the content provider's web-page is downloaded to the user's PC 10 from the second ISP's local area network 100. When the user then clicks on a link on that page associated with a video file to be delivered at full-rate, the request is redirected to the video mirror server 127. The video file from the video mirror server 127 is then downloaded to the user's PC 10 in the same way as the video file was downloaded from the video server 27 in the first embodiment.

As before, router 24 is configured to reset the diffserv codepoint of any packets arriving from the Internet 8 on link 9 to 000000 if they are set to 101000.

The first ISP bills the content distributor in the same way that it billed the content provider in the first embodiment. The content distributor is able to compare the record of full-rate video downloads with the charging data it receives from the Internet Service Provider and thereby apportion its bill between the various content providers.

It will be seen that the second embodiment of the present invention provides an internetwork that supports a business model where a content provider remote from a user provides a full-rate download service to a user using a content distributor and an ISP local to that user. Those skilled in the art will realise that this will provide a better differentiated service than would be achieved were the video were to be sent across the global Internet (many parts of which do not support differentiated services).

The physical configuration of a third embodiment of the present invention in which the content provider is based at a remote Internet Service Provider is as illustrated in Figure 6. However, in the third embodiment, the mirror server 127 remains unused.

The ATM network 2, BAS 6, charging server apparatus (28, 31, 32) and the global Internet 8 are configured and operate as described in relation to the second embodiment.

The first Internet Service Provider's local area network 4 is substantially as described in relation to the second embodiment, save for the removal of the video mirror server 127.

The second Internet Service Provider's local area network 100 is substantially as described in relation to the second embodiment, save that the origin video server 128 is not arranged to be mirrored by a content distributor.

The operation of the third embodiment proceeds similarly to the second embodiment until the user clicks on a link associated with a video file to be delivered at full-rate. The request is directed to the origin video server 128 as, unlike the second embodiment, no re-direction is arranged. The video file from the origin video server 128 is then downloaded to the user's PC 10 in the same way as the video file was downloaded from the video mirror server 127 in the second embodiment.

The first ISP maintains a list of the source address ranges of remote ISPs with which it has reached an appropriate commercial agreement for charging to use the reserve capacity of its customers. The first ISP ensures that the capacity of each Internet backbone link it has with each such remote ISP is sufficient to ensure in all probability that the rate of transmission of a stream of packets between the origin video server 128 and the personal computer 10 is determined by the BAS 6. Like the second embodiment, router 24 is configured to reset the diffserv code-point of any packets arriving from the Internet 8 on link 9 to 000000 if they are set to 101000. But unlike the second embodiment this is only done for packets from source addresses not falling within the list of source address ranges. In this manner, the first ISP can avoid unwillingly offering a differentiated service to content providers on remote ISP's with which it has not reached an appropriate commercial agreement.

The first ISP bills the second ISP in the same way that it billed the content distributor in the second embodiment. The second ISP maintains a record of full-rate downloads metered at its egress interface to the Internet 109 and is able to compare this with the charging data it receives from the first Internet Service Provider and thereby apportion its bill between the various content providers it hosts.

A number of alterations can be made to this third embodiment without departing from the scope of the present invention. Such alterations include:
i) The diffserv code point set by the content provider in the remote ISP to permit use of reserve access capacity need not be the same as that used by the first ISP. A remarking capability on an intermediate router could ensure any such mismatches were corrected.
ii) Instead of the first ISP having a direct commercial arrangement with each remote ISP, this may be through an intermediary, or clearinghouse to reduce the number of bilateral commercial agreements required. Such arrangements are revealed in the applicant's co-pending International patent application WO 99/65184.

It will be seen that the third embodiment of the present invention provides an internetwork that supports a business model where a content provider remote from a user provides a full-rate download service to a user, even though the content provider is remote from the first ISP. Those skilled in the art will realise that this will provide a better differentiated service than would be achieved were the video to be downloaded from any remote ISP regardless of the capacity of intervening links or of whether it supported differentiated services.

In a fourth embodiment of the present invention, the network resource is otherwise uncommissioned fibre (often termed dark fibre) between two Internet providers and the uncommissioned capacity is made accessible only to traffic marked with the permit. A shaping capability on the border router allows access to the reserve capacity for such traffic.

## Claims

1. A method of operating a packet network node, said method comprising:
identifying one or more packets traversing said node as having a permit indication associated with them; and
responsive to said identification, providing said packets with use of an exclusive portion of said node's resources persistently withheld from other packets.

2. A method according to claim 1 wherein said permit indication comprises a shared permit indication.

3. A method according to claim 1 or 2 in which said packets comprise datagrams.

4. A method according to claim 3 wherein the format of said datagrams conforms to the Internet Protocol, and said permit indication is given in the differentiated services field defined by the Internet Protocol.

5. A method according to any one of claims 1 to 3 wherein said permit indication is contained within said packets.

6. A method according to any preceding claim wherein said exclusive portion comprises an exclusive portion specific to an interface of said node.

7. A method according to claim 6 in which said interface-specific exclusive portion comprises at least a predetermined portion of capacity of a link leading from said node.

8. A method according to claim 7 further comprising:
placing packets not having said permit indication into a lower throughput queue; and
transmitting packets from said lower throughput queue onto said link at a rate limited to a limited level of throughput.

9. A method according to any preceding claim wherein said method further comprises giving packet streams having said permit indication priority over other packet streams in accessing a remaining portion of said node's resources.

10. A method of operating a packet subnet to provide a different quality of service to different packet streams, said method comprising operating at least one node within said subnet in accordance with the method of any preceding claim.

11. A method according to claim 10 wherein said node's resource comprises resources for a user-subnet interface.

12. A method according to claim 11 wherein said node provides said user-subnet interface.

13. A method of operating a packet network comprising first and second devices in communication via a packet subnet, said method comprising:
operating said first device to send a plurality of streams of packets;
marking selected streams of packets with said permit indication;
operating said packet subnet in accordance with the method of any one of claims 10 to 12; and
operating said second device to receive said streams of packets;
whereby the quality of service offered by said subnet to the communication of a stream of packets varies in dependence on the presence or absence of said permit indication in said streams of packets.

14. A method according to claim 13 wherein said exclusive communication resources comprises communications resources of a link providing an interface between the subnet and said first or second device.

15. A method according to claim 13 or claim 14, in which said network further comprises a charging device, said method further comprising the steps of:
detecting one or more packets having said permit indication;
sending a charging indication to said charging device responsive to one or more of said detections; and
operating said charging device, responsive to charging indications received at said charging device, to generate charging data for charging for the provision of said exclusive portion of said communications resource.

16. A method according to claim 15 in which:
said charging indication includes an identification of the sender of the packets; and
said charging device operation step involves preparing charging data for charging said sender.

17. A method of bringing a packet network node's resources into service, said method comprising:
in an introduction phase, operating said packet network node in accordance with the method of any one of claims 1 to 9; and
after said introduction phase, operating said packet network node to allow packets without said permit indication access to at least some of said exclusive portion.
